Europäisches Patentamt

European Patent Office

Office européen des brevets

(19)

(11) Veröffentlichungsnummer: **0 141 931**
**B1**

## (12) EUROPÄISCHE PATENTSCHRIFT

(45) Veröffentlichungstag der Patentschrift:
21.06.89

(21) Anmeldenummer: 84109669.6

(22) Anmeldetag: 14.08.84

(51) Int. Cl.⁴: **H 01 B 7/18**

(54) Kabel mit die Kabelseele umgebenden Zugentlastungselementen.

(30) Priorität: 20.08.83 DE 3330096

(43) Veröffentlichungstag der Anmeldung:
22.05.85 Patentblatt 85/21

(45) Bekanntmachung des Hinweises auf die Patenterteilung:
21.06.89 Patentblatt 89/25

(84) Benannte Vertragsstaaten:
AT CH DE FR GB IT LI NL

(56) Entgegenhaltungen:
EP-A-0 016 233
DE-A-3 129 962
US-A-2 345 864
US-A-3 973 385

(73) Patentinhaber: AEG KABEL Aktiengesellschaft,
Bonnenbroicher Strasse 2-14, D-4050
Mönchengladbach 2 (DE)

(72) Erfinder: Haag, Helmut, Dipl.- Phys.,
Herberstrasse 1, D-5177 Titz (DE)
Erfinder: Nothofer, Klaus, Dipl.- Ing., Urdenbacher
Dorfstrasse 13, D-4000 Düsseldorf 13 (DE)
Erfinder: Parmar, Daljit- Singh, Dipl.- Ing.,
Viereichenhöhe 10, D-4300 Essen 1 (DE)
Erfinder: Zamzow, Peter, Dipl.- Ing., Erlenstrasse
5b, D-4630 Bochum (DE)

(74) Vertreter: Langer, Karl- Heinz, Dipl.- Ing., Licentia
Patent- Verwaltungs- GmbH Theodor- Stern- Kai
1, D-6000 Frankfurt/Main 70 (DE)

**Beschreibung**

Die Erfindung bezieht sich auf ein Kabel der im Oberbegriff des Anspruchs 1 bezeichneten Art.

Es ist bekannt, Zugentlastungselemente als schnurförmige Einzelelemente in einem Kabelmantel bei dessen Extrusion allseitig einzubetten. Dabei ergibt sich eine gute kraftschlüssige Verbindung von Mantel und Zugentlastungselementen, so daß Zugkräfte von der Kabelseele ferngehalten werden, ohne daß große Anfangsdehnungen entstehen. Insbesondere für optische Kabel ist es wichtig, daß bei Zugbelastungen die Zugelemente voll wirksam werden, bevor Anfangsdehnungen von mehr als 0,5 % entstehen. Andererseits ist die Biegefähigkeit eines solchen Kabels nicht zufriedenstellend. Die einzubringenden Zugentlastungselemente stören bei der Extrusion des Kabelmantels.

Wenn an einer Schadensstelle Wasser eindringt, so kann dieses durch die Zugentlastungselemente in Längsrichtung weitergeleitet werden. Da nicht ausgeschlossen werden kann, daß bei der Extrusion des Mantels vereinzelt nicht ausgefüllte Hohlräume entstehen, die eine Brücke für den Wasserdurchtritt von den Zugentlastungselementen in die Kabelseele bilden, sind solche Kabel nicht hinreichend längswasserdicht Durch eine Verklebung der aus einer Vielzahl von Fasern bestehenden Zugentlastungselemente wird zwar deren Wasserleitfähigkeit verhindert, aber die Biegefähigkeit des Kabels wird dadurch weiterhin beeinträchtigt.

Der Erfindung liegt die Aufgabe zugrunde, ein Kabel der eingangs genannten Art so zu gestalten, daß sich Zugkräfte bei guter Biegefähigkeit nicht nachteilig auf die Kabelseele auswirken können, und daß insbesondere die Längswasserdichtheit gewährleistet ist.

Die Lösung gelingt durch die im Anspruch 1 oder 4 gekennzeichneten Merkmale. Vorteilhafte Weiterbildungen der Erfindung sind in den Unteransprüchen gekennzeichnet.

Da die aus einer Vielzahl von dünnen, unverklebten Fasern bestehenden Zugentlastungselemente vollständig von einer Hülle aus Schmelzkleber umgeben sind, kann an einer Schadens stelle eindringendes Wasser, welches sich in Längsrichtung durch die Zugentlastungselemente ausbreitet, nicht in die Kabelseele gelangen. Die Längsausbreitung von Wasser innerhalb der Zugentlastungselemente kann durch kontinuierlich oder diskontinuierlich beigefügt es Quellpulver oder durch Tränkung der Faserelemente mit gelartigen Stoffen erschwert oder verhindert werden. Es ist auch möglich, die Fasern der Zugentlastungselemente an in Längsrichtung in größeren Abständen aufeinanderfolgende Stellen punktartig zu verkleben, beispielsweise mit Cyanoacrylat-Kleber. Dadurch wird ein Weiterkriechen von Längswasser verhindert, ohne daß die Biegefähigkeit des Kabels wie bei einer durchgehenden Verklebung der Fasern beeinträchtigt wird.

Da die Zugentlastungselemente in flacher Form um die Seele verteilt sind, ergeben sich kleine Kabeldurchmesser. Dadurch und wegen der Gleitfähigkeit der Fasern gegeneinander wird die Biegefähigkeit des Kabels nicht unzulässig beeinträchtigt.

Die Verwendung von Schmelzkleber für die allseitige Umhüllung der Zugentlastungselemente bewirkt eine kraftschlüssige Verbindung insbesondere mit einer darüber angeordneten Mantelschicht, da beim Extrusionsvorgang ein Anschmelzen bewirkt wird. Deshalb können bei der Verlegung der Kabel herkömmliche Ziehstrümpfe verwendet werden, welche am Kabelmantel angreifen.

Wenn die Zugentlastungselemente lückenlos den gesamten Umfang der Seele bedecken, schmelzen die einzelnen Zugentlastungselemente an ihren Schmalseiten aneinander, so daß sich eine dichte Sperrschicht gegen das Austreten von die Kabelseele gegen Längswasser abdichtenden Füllstoffen wie Petrolat bildet. In diesem Fall ist die Verwendung von Schmelzkleber auf der Basis von Polyamid besonders vorteilhaft, da Polyamid gegen den Angriff von Petrolat widerstandsfähig ist. Eine abdichtende Wirkung ergibt sich auch bei der Lösungsvariante gemäß Anspruch 4.

Vorteilhafte Ausführungsbeispiele der Erfindung sind in der Zeichnung dargestellt.

Fig. 1 zeigt einen Querschnitt durch eine mit erfindungsgemäß gestalteten Zugentlastungselement versehene Kabelseele

Fig. 2 zeigt einen Querschnitt durch eine weitere Ausführungsform einer erfindungsgemäß mit einer Zugentlastung ungebenen Kabelseele.

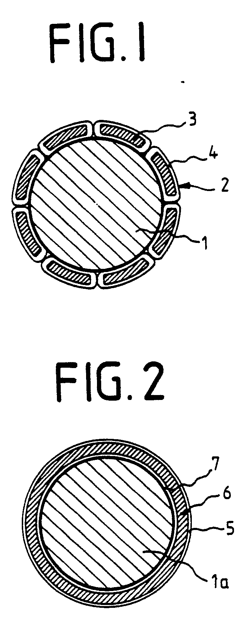

In Fig. 1 ist die Kabelseele 1 von mehreren flachen Zugentlastungselementen 2 umgeben, die lückenlos mit ihren Schmalseiten aneinanderliegen. Jedes Zugentlastungselement 2 besteht aus einem Bündel 3 von parallel verlaufenden Fasern und einer diese umgebenden Hülle 4 aus Schmelzkleber. Beim Aufextrudieren eines Mantels, beispielsweise aus Polgethglen, verklebt dieser mit den radial äußeren Schichten des Schmelzklebers. Weiterhin verkleben auch die einzelnen Zugentlastungselemente 2 an ihren Schmalseiten miteinander. Um diese Wirkung zu intensivieren, sind die Dicken der Schmelzkleberschichten an den einander benachbarten Schmalseiten der Zugentlastungselemente 2 verstärkt.

Die Schmelzklebersichten sind auf jedes einzelne Zugentlastungselement 2 aufextrudiert. Zunächst können diese bei der Extrusion mit kreisrundem Querschnitt hergestellt und nachfolgend in noch warmem Zustand flach gedrückt werden. Anschließend werden sie mit langem Schlagverhältnis von 40 bis 60 um die Kabelseele verseilt. Um die Verseillage der Zugentlastungselemente 2 kann eine Haltewendel aufgebracht werden. Diese bewirkt durch die radiale Anpreßkraft eine abschnürende Zusammenpressung der in jedem Zugentlastungselement 2 befindlichen Fasern, so daß die Weiterleitung von Längswasser durch die Zugentlastungselemente zumindest erheblich erschwert wird.

Bei der Ausführung nach Fig. 2 ist auf die Kabelseele 1a eine erste Schmelzkleberschicht 5 aufextrudiert. Auf diese wird eine aus einer Vielzahl von dünnen, parallelen Fasern bestehende Schicht 6 mit langem Schlag aufgeseilt, beispielsweise durch Aufseilen von mehreren nebeneinander liegenden Einzelbündeln, die schließlich durch eine Haltewendel auf der Schmelzkleberschicht 5 gehalten werden.

Auf die Faserschicht 6 ist wiederum eine zweite Schmelzkleberschicht 7 aufextrudiert. Die Schmelzkleberschichten 5 und 7 sowie die zwischen diesen eingeschlossene Faserschicht 6 bilden die Zugentlastung für die Seele 1a.

Auf die Zugentlastung kann durch Extrusion ein Kabelmantel aufgebracht werden. Durch die Extrusionswärme schmilzt die Schmelzkleberschicht 7 und verbindet sich haftend mit dem Kabelmantel.

## Patentansprüche

1. Kabel mit die Kabelseele (1), umgebenden Zugentlastungselementen (2), welche aus einer Vielzahl zueinander parallel verlaufender dünner Fasern bestehen, dadurch gekennzeichnet, daß die Zugentlastungselemente (2) aus einem flachen, bandartigen Bündel (3) mit jeweils einer Vielzahl von gegeneinander gleitfähigen dünnen Fasern bestehen, welche von einer geschlossenen, aus Schmelzkleber bestehenden Hülle (4) umgeben sind, und welche mit große Schlaglänge um die Kabelseele verseilt sind (Fig. 1).

2. Kabel nach Anspruch 1, dadurch gekennzeichnet, daß die Zugentlastungselemente (2) den Umfang der Kabelseele (1) lückenlos abdecken.

3. Kabel nach Anspruch 2, dadurch gekennzichnet, daß die aus Schmelzkleber bestehenden Hüllen (4) an den- Schmalseiten der Bündel (3) versträrkt sind.

4. Kabel mit die Kabelseele (1), umgebenden Zugentlastungselementen (2) welche aus einer Vielzahl zueinander parallel verlaufender dünner Fasern bestehen, dadurch gekennzeichnet, daß die Zugentlastungselemente (2), als die Kabelseele vollständig umgeb ende Schicht (6) aus einer Vielzahl von gegeneinander gleitfähigen dünnen Fasern ausgebildet sind, welche mit langem Schlag um die Kabelseele (1a) verseilt sind, und daß die Schicht (6) zwischen einer unteren (5) und oberen (7) Mantelschicht aus Schmelzkleber angeordnet ist (Fig. 4).

5. Kabel nach einem der Ansprüche 1 bis 4, dadurch gekennzeichnet, daß die Schmelzkleberschichten (4, 5, 7) durch Extrusion hergestellt sind.

6. Kabel nach einem der Ansprüche 1 bis 5, dadurch gekennzeichnet, daß die Schmelzkleberschichten (4, 5, 7) aus einem aromatischen Polyamid bestehen.

7. Kabel nach einem der Anspüche 1 bis 5, dadurch gekennzeichnet, daß die Schmelzkleberschichten (4, 5, 7) aus Polyethylen bestehen.

8. Kabel nach einem der Ansprüche 1 bis 7, dadurch gekennzeichnet, daß die Fasern aus einem, insbesondere unter dem Namen "Kevlar" bekannten, aromatischen Polyamid bestehen.

9. Kabel nach einem der Ansprüche 1 bis 7, dadurch gekennzeichnet, daß die Fasern aus Glas mit einem Durchmesser von weniger als 30 $\mu$m bestehen.

10. Kabel nach einem der Ansprüche 1 bis 9, dadurch gekennzeichnet, daß die Fasern kontinuierlich oder diskontinuierlich mit Quellpulver durchsetzt sind.

11. Kabel nach einem Ansprüche 1 bis 9, dadurch gekennzeichnet, daß die Fasern mit einem gelartigen Stoff durchtränkt sind.

12. Kabel nach einem der Ansprüche 1 bis 9, dadurch gekennzeichnet, daß die Fasern an in Längsrichtung in größeren Abständen aufeinanderfolgenden Stellen punktartig, insbesondere durch Cyanoacrylatkleber, miteinander verklebt sind.

13. Kabel nach einem der Ansprüche 1 bis 9, dadurch gekennzeichnet, daß die Zugentlastungselemente (2) durch eine Haltewendel mit radialem Druck an die Kabelseele gepreßt sind.

## Claims

1. Cable with strain relief elements (2) which surround the cable core (1) and consist of a plurality of thin fibres running parallel to each other, characterised in that the strain relief elements (2) each consist of a flat, ribbon-like bundle (3) with a plurality of thin fibres which can slide over each other, which are surrounded by a closed envelope (4) made of fusion adhesive and which are stranded around the cable core with a long length of lay (Fig. 1).

2. Cable according to claim 1, characterised in that the strain relief elements (2) cover the circumference of the cable core (1) without gaps.

3. Cable according to claim 2, characterised in that the envelopes (4) made of fusion adhesive are thickened at the edges of the bundles (3).

4. Cable with strain relief elements (2) which surround the cable core (1) and consist of a plurality of thin fibres running parallel to each other, characterised in that the strain relief elements (2) are constructed as a layer (6) completely surrounding the cable core and consisting of a plurality of thin fibres which can slide over each other and are stranded around the cable core (1a) with a long lay, and the layer (6) is disposed between lower (5) and upper (7) sheath layers of fusion adhesive (Fig. 2).

5. Cable according to any of claims 1 to 4, characterised in that the fusion adhesive layers (4, 5, 7) are produced by extrusion.

6. Cable according to any of claims 1 to 5, characterised in that the fusion adhesive layers (4, 5, 7) are made of an aromatic polyamide.

7. Cable according to any of claims 1 to 5, characterised in that the fusion adhesive layers (4, 5, 7) are made of polyethylene.

8. Cable according to any of claims 1 to 7, characterised in that the fibres are made of an aromatic polyamide known by the name of "Kevlar".

9. Cable according to any of claims 1 to 7, characterised in that the fibres are made of glass with a diameter of less than 30 μm.

10. Cable according to any of claims 1 to 9, characterised in that the fibres are continuously or intermittently interspersed with expanding powder.

11. Cable according to any of claims 1 to 9, characterised in that the fibres are impregnated with a gel-like substance.

12. Cable according to any of claims 1 to 9, characterised in that the fibres are bonded together in spot fashion at points one after the other at fairly large intervals in a longitudinal direction, in particular by cyanoacrylate adhesive.

13. Cable according to any of claims 1 to 9, characterised in that the strain relief elements (2) are pressed against the cable core with radial pressure by a reinforcement helix.

## Revendications

1. Câble comprenant des éléments de décharge de la traction (2) qui entourent l'âme (1) du câble et qui sont composés d'une pluralité de fibres fines s'étendant parallèlement entre elles, caractérisé en ce que les éléments de décharge de la traction (2) sont composés d'un faisceau plat (3) en forme de ruban, comprenant une pluralité de fibres fines capables de glisser les unes sur les autres, qui sont entourées d'une enveloppe (4) fermée, composé d'une colle fusible, et qui sont câblées autour de l'âme du câble avec une grande longueur de commettage (figure 1).

2. Câble selon la revendication 1, caractérisé en ce que les éléments de décharge de la traction (2) couvrent la circonférence de l'âme (1) du câble sans laisser d'intervalles libres.

3. Câble selon la revendication 2, caractérisé en ce que les enveloppes (4) composées de couches fusibles sont épaissies au droit des petits côtés des faisceaux (3)

4. Câble comprenant des éléments de décharge de la traction (2) qui entourent l'âme du câble et qui sont composés d'une pluralité de fibres fines s'étendant parallèlement entre elles, caractérisé en ce que les éléments de décharge de la traction (2) sont réalisés sous la forme d'une couche (6) composée d'une pluralité de fibres fines capables de glisser les unes sur les autres, qui entoure entièrement l'âme du câble, les fibres étant câblées autour de l'âme (1a) du câble avec un commettage long, et en ce que la couche (6) est interposée entre une couche de gaine intérieure (5) et une couche de gaine supérieure (7) faites de colle fusible.

5. Câble selon les revendications 1 à 4, caractérisé en ce que les couches de colle fusible (4, 5, 7) sont fabriquées par extrusion.

6. Câble selon les revendications 1 à 5, caractérisé en ce que les couches de colle fusible (4, 5, 7) sont composées d'une polyamide aromatique.

7. Câble selon les revendications 1 à 5, caractérisé en ce que les couches de colle fusible (4, 5, 7) sont composées de polyéthylène.

8. Câble selon les revendications 1 à 7, caractérisé en ce que les fibres sont faites d'une polyamide aromatique, en particulier de celle connue sous le nom de "Kevlar".

9. Câble selon les revendications 1 à 7, caractérisé en ce que les fibres sont composées de verre, avec un diamètre de moins de 30 μm.

10. Câble selon les revendications 1 à 9, caractérisé en ce que les fibres sont garnies d'une poudre gonflante, de façon continue ou discontinue.

11. Câble selon les revendications 1 à 9, caractérisé en ce que les fibres sont imprégnées d'une substance du type gel.

12. Câble selon les revendications 1 à 9, caractérisé en ce que les fibres sont collées les unes aux autres en des zones ponctuelles qui se succèdent à intervalles relativement grands dans la direction longitudinale, en particulier au moyen d'une colle du type cyanoacrylate.

13. Câble selon les revendications 1 à 9, caractérisé en ce que les éléments de décharge de la traction (2) sont comprimés contre l'âme du câble avec une pression radiale, par un enroulement de retenue.

# FIG.1

# FIG.2